Europäisches Patentamt

European Patent Office

Office européen des brevets

(11) Publication number: 0 339 156
A2

## (12) EUROPEAN PATENT APPLICATION

(21) Application number: 88309781.8

(22) Date of filing: 19.10.88

(51) Int. Cl.⁴: **F16L 41/04**

(30) Priority: 26.04.88 GB 8809796

(43) Date of publication of application:
02.11.89 Bulletin 89/44

(84) Designated Contracting States:
AT BE CH DE ES FR GB GR IT LI LU NL SE

(71) Applicant: ALH SYSTEMS LIMITED
Station Road
Westbury Wiltshire BA13 4TN(GB)

(72) Inventor: Carruthers, Alec
30 Westbury Road
Bratton Wiltshire(GB)

(74) Representative: Calderbank, Thomas Roger et
al
MEWBURN ELLIS & CO. 2/3 Cursitor Street
London EC4A 1BQ(GB)

(54) Pipe fitting.

(57) A pipe fitting 10 is inserted into a hollow pipe 21 by forming a hole in that pipe and inserting the fitting 10 into that hole. The fitting 10 is first pushed into the hole until a seal 34, positioned below a ring 29 on the fitting 10, is in contact with the outer surface of the pipe 21. Initially the end 12 of the fitting 10 inserted into the pipe 21 has projections which are bent inwardly, but once the fitting 10 has been inserted into the pipe 21, the projections 13 are expanded outwardly by a mandrel 31. The fitting 10 is then drawn upwardly, until a seal 33 around the projections 13 is in contact with the inner surface of the pipe 21. If the pipe is pressurised, there is a housing 20 secured by a valve 22 to the pipe 21 to prevent pressure loss.

FIG.3

EP 0 339 156 A2

## PIPE FITTING

The present invention relates to the insertion of a fitting into a pipe to form e.g. a Tee junction or a plug.

The standard way to insert a fitting into a pipe is to use a threading method, in which a screw thread is cut into the walls of an access hole in a pipe, and a threaded fitting is then inserted into that access hole. This is, however, troublesome, and therefore the possibility of non-threaded fittings have been investigated. However, one of the main considerations of such a fitting is that it provides an adequate flow area from the pipe, and proposals to base the fitting on an expanded polymeric seal (see GB 2008710A) have resulted in fittings with only a limited flow area.

Therefore, the present invention proposes that the fitting be in the form of a sleeve which is inserted into the access hole in the pipe, and a part of the fitting within the pipe is then expanded to grip the pipe. In this way, the fitting can withstand pressure and mechanically applied forces without difficulty.

In order to provide an adequate seal between the fitting and the pipe, a resilient seal may be provided adjacent that part of the fitting which is expanded, so that the resilient seal is forced into contact with the pipe. When such a fitting is used in a gas pipe, a good seal is particularly important and in that case, it may be necessary to form a further seal between the fitting and the walls of the access hole, e.g. by the injection of a suitable sealant. This has a further advantage in composite pipes, i.e. pipes lined with e.g. a resin liner. In some cases, the seal between the liner and the pipe wall is not complete, and the cutting of the access hole may produce a flow path between the liner and the pipe itself. In this case, the presence of sealant between the fitting and the wall of the access hole will seal that flow path.

Preferably, the part of the fitting to be expanded has a step region at or adjacent one end, with that step region initially being bent inwardly, relative to the rest of the fitting, so that it may pass easily through the access hole. Then, pressure on an internal surface of the step region, e.g. a tapered surface, will then force that step region outwardly, into contact with the pipe. To assist with this, the part of the fitting formed by that step region may be split in the longitudinal direction of the access hole to permit the diameter of the stepped region to be increased. This may then result in gaps around the step region when it is expanded, but the presence of a resilient seal around that region removes any problems.

As was mentioned above, the fitting may be expanded by forcing outwardly an inner surface of the step region. To achieve this, the present invention may further provide a tool for carrying out that expansion, which has a mandrel insertable into the pipe fitting, which mandrel has a bearing surface which bears against the internal surface of the fitting to force it outwardly.

Preferably, the fitting has means for biasing the expanded part, and the seal if provided, against the inner surface of the pipe. The simplest way of achieving this is to provide a collar, e.g. a nut, which fits over and engages the part of the fitting extending out of the pipe, and bears against the outer surface of the pipe. The fitting is then held in place due to the clamping effect between the collar, and the expanded part of the fitting. With such an arrangement, the means for forcing the collar into contact with the outer surface of the pipe wall may be combined into a single structure with the mandrel which forces the expanded part of the pipe outwardly.

Where the pressure inside and outside the pipe is the same, there is no difficulty in cutting the access hole and inserting and expanding the fitting. However, if the fitting has to be inserted when the pipe is under pressure, it is necessary to provide a valve at the point at which the fitting is to be inserted, which valve prevents fluid within the pipe from escaping. Again, such a valve may be combined with the structure carrying the mandrel for expanding the pipe.

An embodiment of the invention will now be described in detail, by way of example, with reference to the accompanying drawings, in which:

Fig. 1 shows a cross-sectional view of a fitting according to the present invention;

Fig. 2 shows a plan view of the fitting of Fig. 1;

Fig. 3 shows a first stage in the insertion of the fitting of Fig. 1 into a pipe;

Fig. 4 shows a second stage of the insertion of the fitting;

Fig. 5 shows a third stage in the insertion of the fitting;

Fig. 6 shows a fourth stage in the insertion of the fitting;

Fig. 7 shows a fifth stage in the insertion of the fitting;

Fig. 8 shows a sixth stage in the insertion of the fitting;

Figs. 9a and 9b show the fitting of Fig. 1 at an intermediate stage in insertion and when fully inserted respectively; and

Fig. 10 shows an alternative tool for insertion of the fitting into a non-pressurised pipe.

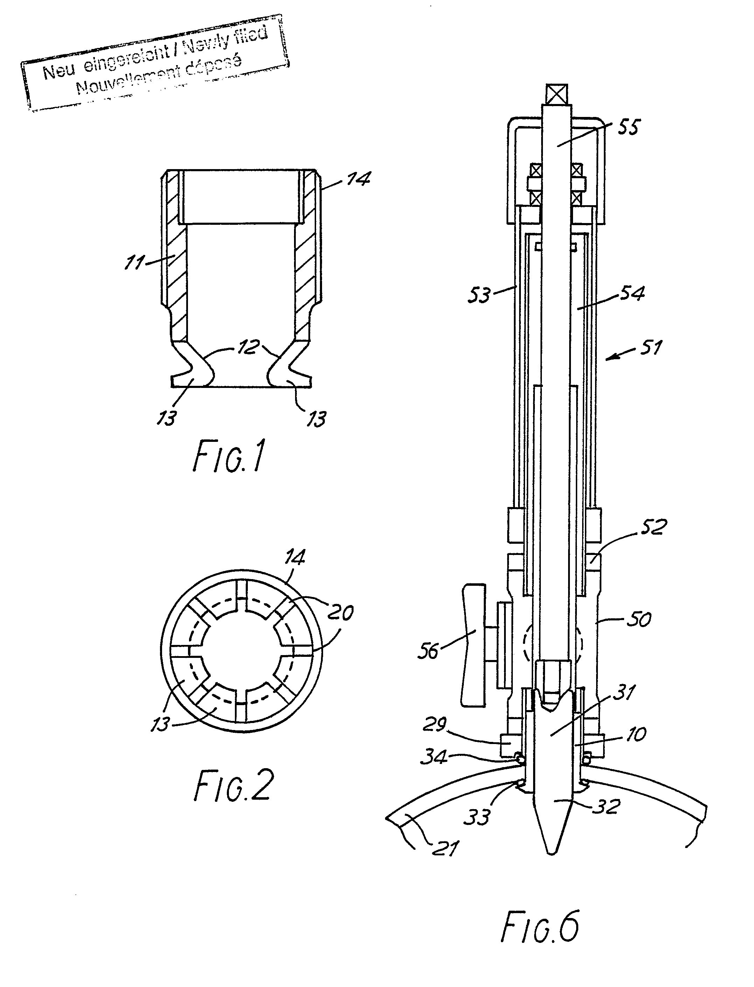

Referring first to Fig. 1, a fitting 10 according to the present invention for fitting into a pipe comprises a hollow sleeve 11 of metal or other suitable material. One end of the sleeve is provided with a step region formed by by an inwardly tapered wall 12 terminating in projections 13 which extend outwardly of the sleeve. As illustrated, the tapered wall 12 and the projections 13 are initially shaped so that the circumferentially outer edges of the projections 13 do not extend beyond the outer circumference of the rest of the sleeve 11, so that the fitting 10 can be inserted into a suitable aperture. The outer surface of the sleeve 11 is also provided with suitable means e.g. threads 14 for engaging a collar (to be described later).

When the fitting 10 is inserted into an aperture in a pipe, the part of the fitting 10 formed by the walls 12 and projections 13 is deformed, so that the projections 13 are forced outwardly. Since this will result in an increase in the internal diameter of that part of the fitting corresponding to the projections 13, slots 20, as shown in Fig. 2, may be provided in the walls 12 extending axially of the sleeve 11.

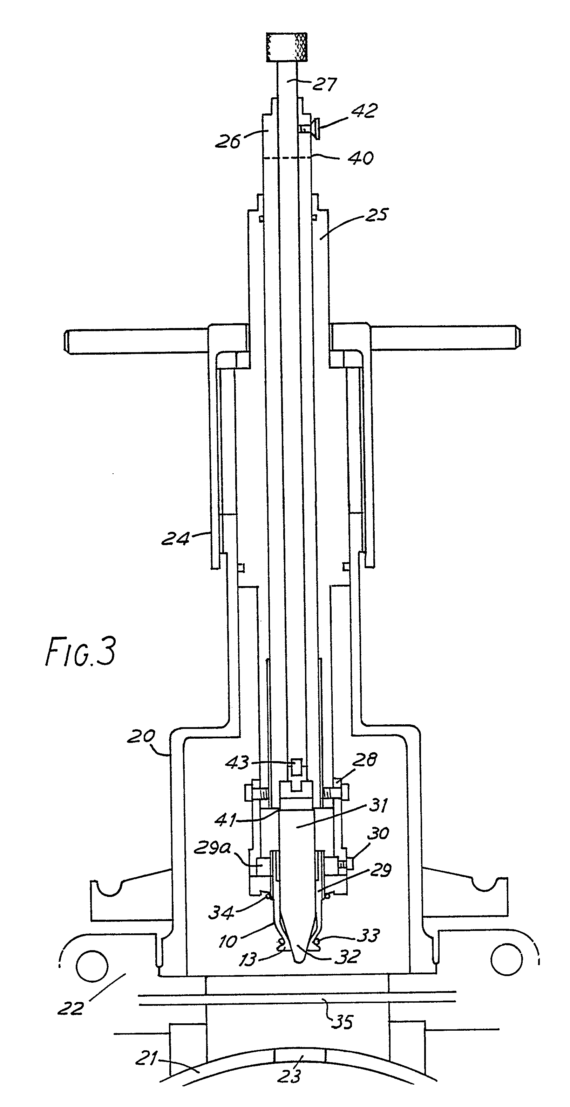

The insertion of the fitting 10 into a pipe will now be described with reference to Figs. 3 to 8. Firstly, a casing 20 is sealed to the pipe 21 via a service valve 22, and a hole 23 cut into the pipe. The cutting of such a hole 23 in a pipe 21, when the pipe 21 contains gas under pressure, is known and will not be described in more detail now.

Once the hole 23 has been formed, the structure shown in Fig. 3 is then assembled, in which the casing 20, and an end cap 24 support an outer spindle 25, an inner spindle 26, and a locking spindle 27. The outer spindle 25 supports a socket 28 within the housing 20, and within this socket 28 is a ring 29 and nut 29a which are located on the fitting 10 and are secured to the outer spindle by a locking nut 30. Supported within the fitting 10 is a mandrel 31 with a tapered end 32. The mandrel 31 is not fixed to the fitting 10, but is push-fitted within it.

Fig. 3 also shows two seals, one seal 33 being an O-ring surrounding the fitting 10 adjacent the projections 13 whilst the other seal 34 is mounted on the ring 29 at the point where the fitting 10 emerges from that ring 29.

In the position shown in Fig. 3, the part of the housing 20 containing the fitting 10 and the mandrel 31 is sealed from the pipe 21 via a valve member 35 of the service valve 20. This is achieved by ensuring that the cap 24 is raised to an upper position relative to the casing 20. It can be seen that, due to the presence of the valve member 35, the casing 20 can be removed and secured from the service valve 22, and it is this removal which permits the assembly of the fitting 10, mandrel 31, etc., as shown in Fig. 3.

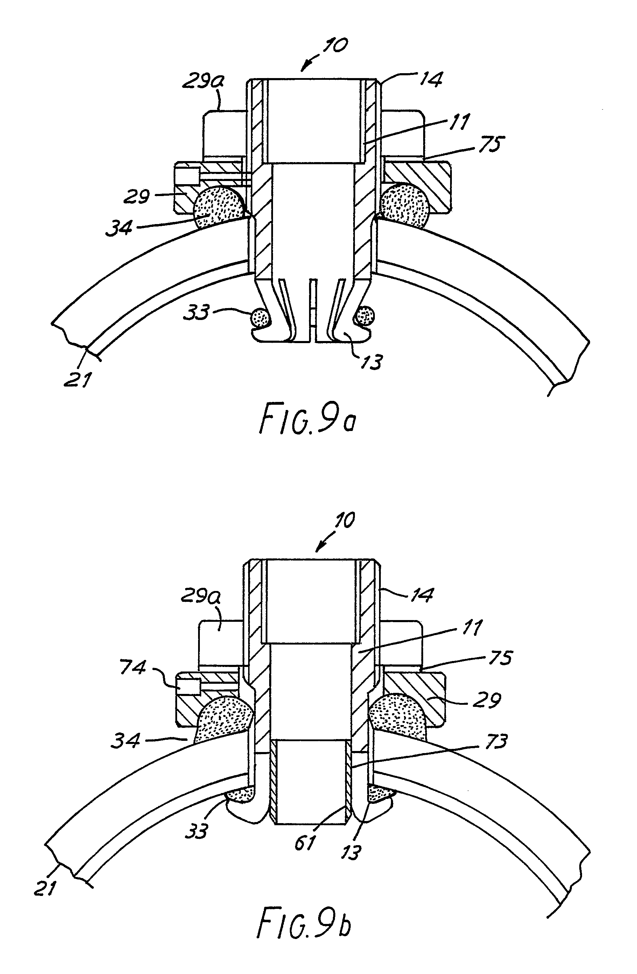

With the housing 20 secured to the service valve 22, and pressure equalised across the valve member 35, the valve member 35 may be withdrawn. Then, by screwing down the cap 24 on the housing 20, the spindles 25,26 and 27 are lowered relative to the housing 20 and pipe 21, and this process is continued until the fitting 10 is inserted into the hole 23, until the seal 34 comes into contact with the outer wall of the pipe 21. This is the position shown in Fig. 9a.

The next step is to expand the end of the fitting 10. To do this, the outer spindle 25 is held, and the inner spindle is moved downwardly, e.g. by screwing it, until a reference mark 40 on the inner spindle 26 is aligned with the top of the outer spindle 25. The end of the inner spindle 26 bears on a shoulder 41 of the mandrel 31, and therefore this lowering of the inner spindle 26 causes the mandrel 31 to be forced downwardly in the fitting 10. The tapered end 32 of the mandrel 31 forces the projections 30 outwardly, thereby expanding the end of the fitting 10.

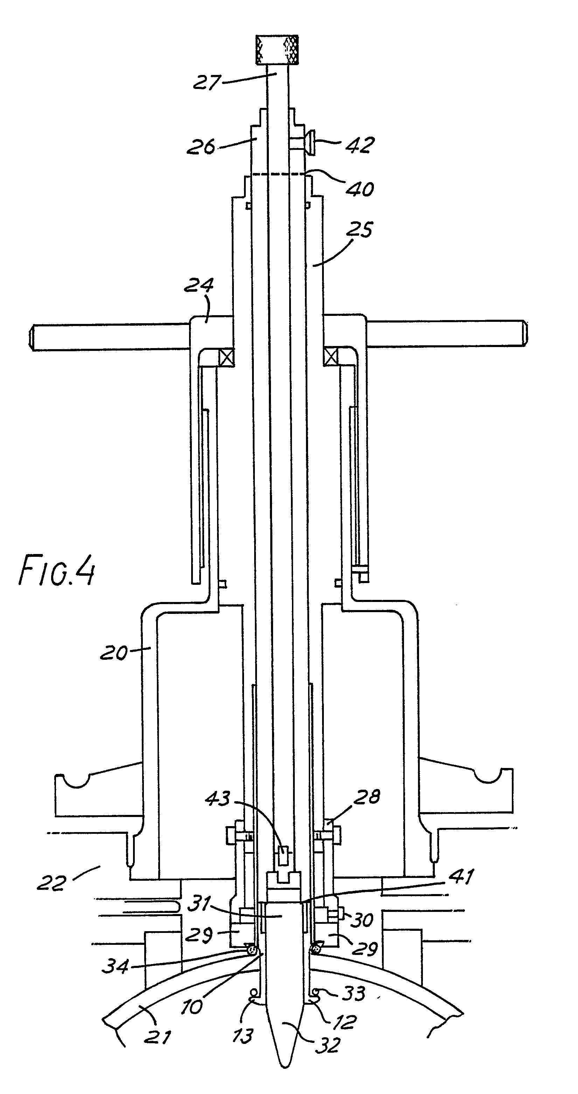

A thumbscrew 42 securing the locking spindle 27 to the inner spindle 26 is then released, and the locking spindle 27 is lowered until a locking key 43 on the end of the locking spindle 27 engages an upper part of the mandrel 31. This is the position shown in Fig. 4. In this position, the locking spindle 27 is re-secured to the inner spindle 26 by tightening the thumbscrew 42.

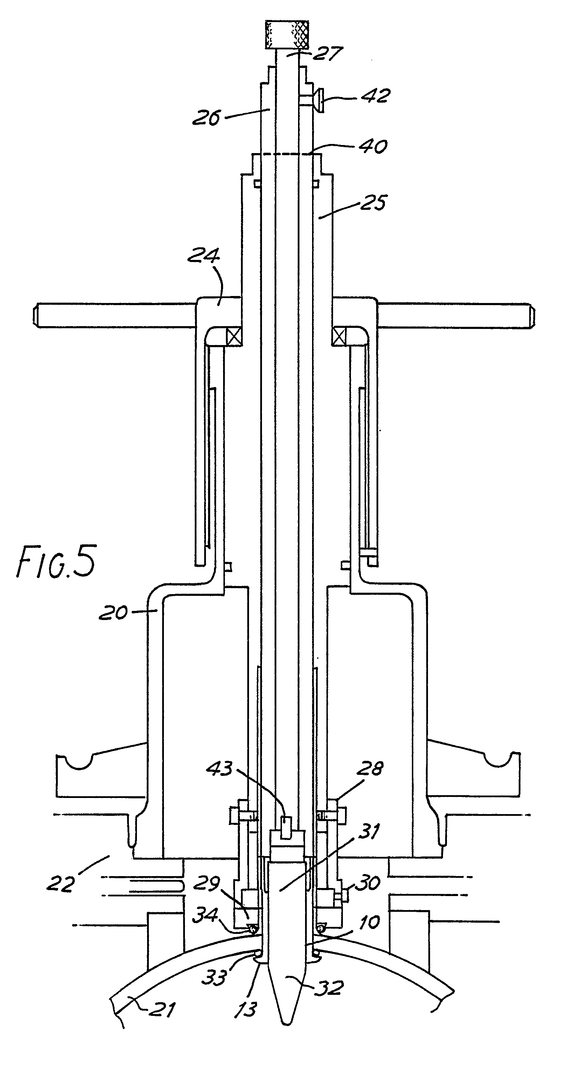

In this position, the mandrel 31 is held with a press-tight fitting inside the fitting 10. As a result, when the inner spindle 26 (and hence the locking spindle 27) is raised relative to the outer spindle 25, the fitting 10 is moved upwardly in the hole 23, also moving relative to the ring 29 which cannot move due to the socket 28 being secured to the outer spindle 25. This upward movement of the inner spindle 26 eventually brings the seal 33 into contact with the inner wall of the pipe 21 as shown in Fig. 5. In this position, the fitting 10 is completely secured to the pipe 21, and sealed thereto on either side of the hole 23 via seals 33 and 34. It is possible, in this position, for the interior of the housing 20 to be vented, and removed leaving the spindles in place. By releasing the screw 30, the inner and outer spindles may be removed, leaving the fitting in the pipe with the mandrel 31 as a temporary plug.

The next step is to remove the mandrel. As shown in Fig. 6, a ball valve 50 is secured to the fitting, e.g. by a thread, and a mandrel extractor tool, generally shown at 51 is fitted onto the ball valve 50 via a locking nut 52. The mandrel extractor tool comprises a sleeve 53 containing a jacking tube 54 and an extractor spindle 55 which extends axially of the jacking tube and is screw-threaded to the mandrel 31.

The jacking sleeve 34 rotates in the sleeve 53 and this movement lifts it, the extractor spindle 55, and hence the mandrel 31. This process is continued until the mandrel 31 is clear of the ball valve 50, at which point the ball valve 50 may be closed by turning the handle 56 to seal the gas flow path from the pipe 21 through the fitting 10. At this point, the extractor tool 51 may be removed from the ball valve 50.

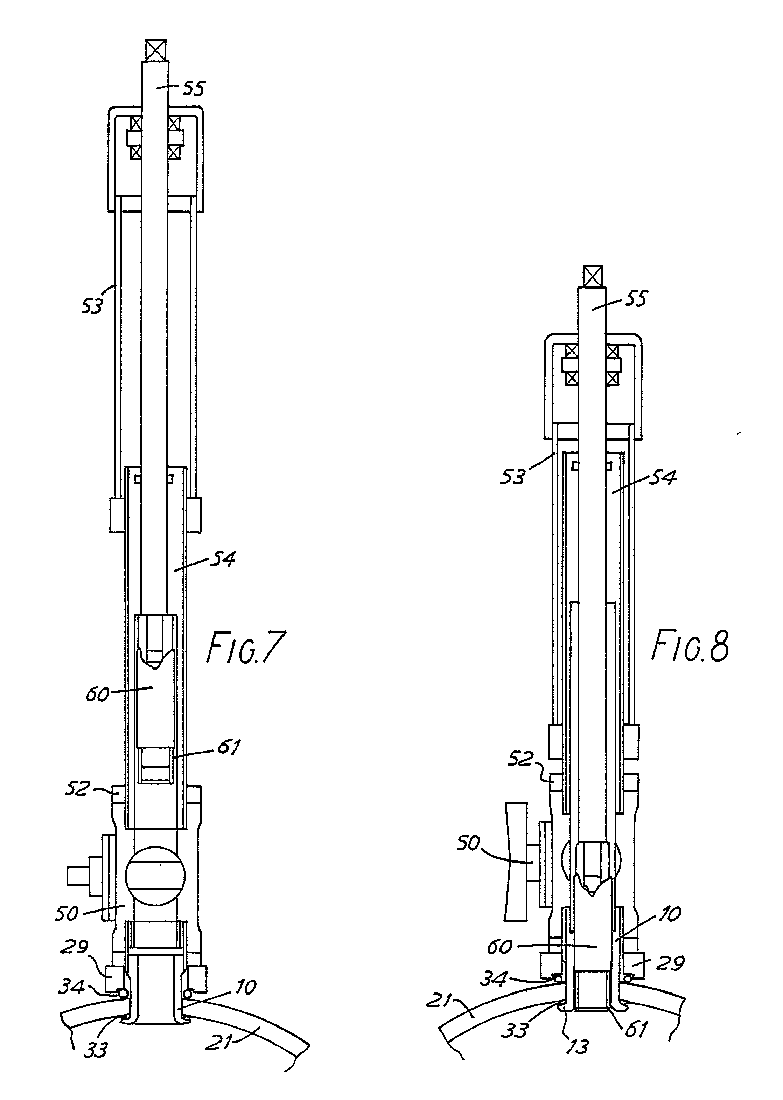

With tool 51 removed, the mandrel 31 is disconnected from the extractor spindle 55 and a ferrule insertion stub 60 (see Fig. 7) secured to the end of the extractor spindle 55. A ferrule 61 is then push-fitted onto the end of the stub 60, the stub 60 retracted by moving the sleeve 53 upwardly on the jacking tube 50, and mounting that jacking tube 54 onto the ball valve 10 by means of locking nut 52. This is the position shown in Fig. 7.

The ball valve is then opened and the ferrule is moved downwardly by moving the sleeve 53 downwardly on the jacking tube 54. This lowering is continued, until the ferrule 61 has reached the desired point, i.e. where its end is adjacent the projections 13. This distance can be controlled by controlling the movement of the sleeve 53 on the jacking tube 54. The insertion stub 60 may then be retracted, leaving the ferrule 61 in position. This is achieved by movement of the sleeve 53, until the stub 60 is clear of the ball valve 50. The ball valve 50 is then closed. The assembly consisting of the sleeve 53, jacking tube 54, and extraction spindle 55 may then be removed from the ball valve 50 by releasing locking nut 52.

The resulting structure is shown in Fig. 9b, although a further modification has been made as will now be described.

Normally, the sealing effect of the seals 33,34 will be sufficient. However, as illustrated in Fig. 9, the pipe 21 may comprise an outer wall 71 and an inner liner 72 of e.g. resin. In this case, there is a risk that faulty bonding between the liner 72 and the outer wall 71 may result in a fluid flow path therebetween. This then weakens the seal and to overcome this, it may be necessary to provide a further seal 73 extending along the outer wall of the the sleeve 11 of the fitting 10. This seal 73 may be formed by injection of a suitable sealant into the annular gap between the sleeve 11 of the fitting 10 and the edges of the hole in the pipe 21. This injection may be achieved via a passage 74 in the ring 29. The sealant may be e.g. of anaerobic-type which has a low initial viscosity. By injecting that sealant under pressure, the sealant flows into any gaps between the outer wall 71 and the lining 72, preventing ingress of fluid. Figs. 9a and 9b also show the presence of a seal 75 between the ring 24 and the nut 21a.

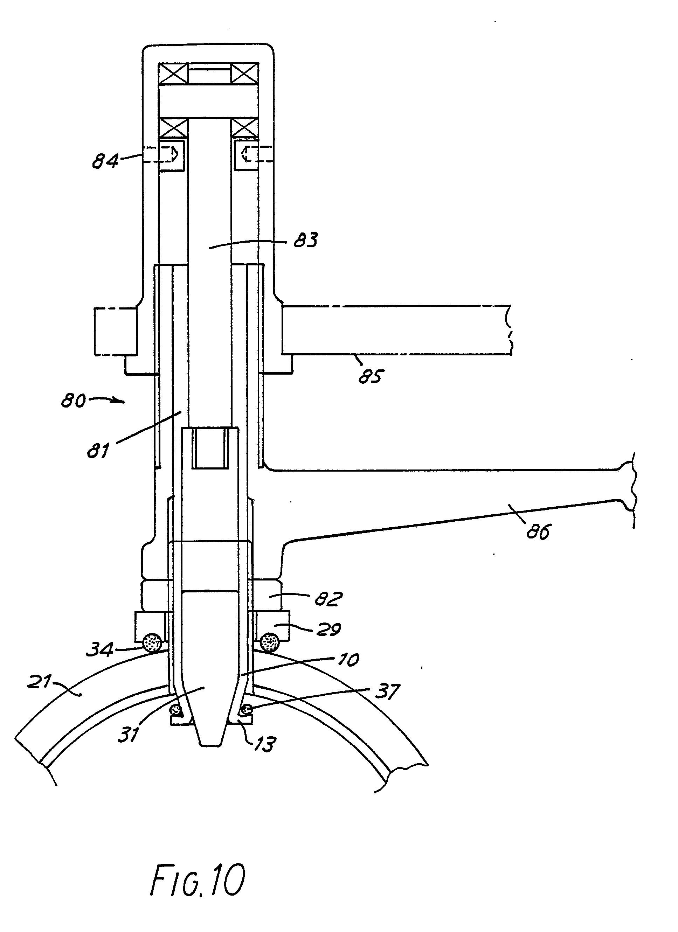

The above description of the insertion of a fitting 10 into the pipe 21 has been concerned with the situation where that pipe 21 is pressurised. For non-pressurised pipes, a more simple tool may be used, and this is shown in Fig. 10. Where possible, the same reference numerals have been used as in the preceding description. The tool generally indicated at 80 comprises a sleeve 81 on the ring 29 via a lock fitting 82, and slidable within that sleeve 81 is a spindle 83 mounted on an end cap 84. That end cap 84 extends over the sleeve 81 and is movable thereto with a ratchet action, controlled by a handle 85. Fig. 10 shows this handle 85, the cap 84, and hence the mandrel in a position prior to widening of the projections 13, but by lowering the handle 85 to the position shown at 86, the end cap 84 is lowered, the spindle 83 is moved downwardly, and hence the mandrel 31 is pushed into the fitting 10 to widen the projection 13. The handle 86, the end cap 84 and the spindle 83 are then raised to raise the mandrel and bring the wheel 33 into contact with the inner wall of the pipe 21. The tool 80 may then be removed, and subsequently used to fit a ferrule.

Thus, according to the present invention, a fitting for a pipe is provided which can be inserted easily, and may be used for both pressurised and unpressurised pipes.

**Claims**

1. A method of inserting a fitting into a hollow pipe, the fitting being a hollow sleeve, comprising forming a hole in the pipe, inserting a part of the fitting into the hole, and expanding that part of the fitting within the hole such that the fitting grips the pipe.

2. A method according to claim 1, wherein a resilient seal is provided on the part of the fitting inserted into the hole, and the expansion of that part of the fitting forces the seal into contact with an inside wall of the pipe.

3. A method according to claim 1 or claim 2, wherein a further seal is provided between the fitting and an outside wall of the pipe adjacent the hole.

4. A method according to any one of the preceding claims, wherein the fitting has a projecting step region at the end of the fitting inserted into the hole, which projecting step region is bent inwardly prior to the insertion of the fitting, and is bent outwardly after insertion of the fitting.

5. A method according to claim 4, wherein the step region has a tapered surface inside the fitting, and the step region is forced outwardly by the action of a tapered mandrel moving inside the fitting.

6. A method according to claim 4 or claim 5, wherein the tapered surface is split in the direction of the axis of the fitting.

7. A method according to any one of the preceding claims, further including injecting sealing material between the fitting and the walls of the hole.

8. A tool for fitting a fitting into a hollow pipe, the fitting being in the form of a hollow sleeve, the tool comprising a frame for mounting on the pipe, means for supporting the fitting on the frame for insertion of the fitting into a hole in the pipe, and a mandrel insertable into the fitting to cause expansion of part of the fitting inserted into the pipe.

9. A tool acccording to claim 8, wherein the means for supporting the fitting is adapted to clamp the fitting to the outside of the pipe.

10. A tool according to claim 8 or claim 9, wherein the frame includes a housing for forming a sealed enclosure on the pipe over the hole.

FIG.1

FIG.2

FIG.6

FIG.3

Fig.4

FIG.5

FIG.7

FIG.8

FIG. 9a

FIG. 9b

FIG.10